# FASCICULE DE BREVET EUROPEEN

(11) **EP 3 818 336 B1**
(45) Date de publication et mention de la délivrance du brevet: **13.09.2023**
(21) Numéro de dépôt: 19758898.1
(22) Date de dépôt: 04.07.2019
(51) Int. Cl.: G01B 21/04, G01B 5/008, G01B 5/012, G01B 11/00

(54) **BRAS DE MESURE AVEC EXTREMITE MULTIFONCTION**
MESSARM MIT MULTIFUNKTIONSENDE
MEASURING ARM HAVING A MULTI-FUNCTIONAL END

(30) Priorité: 06.07.2018 FR 1856255
(43) Date de publication de la demande: 12.05.2021
(73) Titulaire: Hexagon Metrology SAS, 91978 Courtaboeuf (FR)
(72) Inventeur: DESFORGES, Laurent, 41310 AMBLOY (FR); DUPORTAL, Thibault, 41310 PRUNAY CASSEREAU (FR); ROUX, Denis, 41100 VILLEMARDY (FR); FAMECHON, Jean-Luc, 41100 VILLERABLE (FR); INGLIS, Wes, VISTA California 92083 (US)
(74) Mandataire: Lavialle, Bruno François Stéphane
(86) Numéro de dépôt international: PCT/EP2019/068019
(87) Numéro de publication internationale: WO 2020/007993

(56) Documents cités:
- EP-A1- 1 577 050
- EP-B1- 0 694 158
- US-A1- 2005 166 413
- US-A1- 2009 000 136
- US-A1- 2016 084 633

## Description

La présente invention concerne le domaine de la métrologie et plus particulièrement la mesure d'objets tridimensionnels.

### ETAT DE LA TECHNIQUE

Un dispositif de mesure tridimensionnelle, comprend généralement un bras comportant des éléments articulés dont une base de fixation, un premier segment relié à la base de fixation par une première articulation, un deuxième segment relié au premier segment par une deuxième articulation, un corps d'interface relié au deuxième segment par une troisième articulation, et des capteurs positionnels associés aux articulations et reliés électriquement à une unité électronique d'acquisition pour fournir à l'unité électronique d'acquisition des signaux de mesure de positions relatives des segments les uns par rapport aux autres. Le corps d'interface porte un organe de mesure et une poignée permettant à un opérateur de pointer l'organe de mesure vers une zone de l'objet à mesurer (cf. US 2016/084633 A1, par exemple).

L'organe de mesure peut être de type à contact ou de type sans contact. L'organe de mesure à contact est un palpeur destiné à être appliqué contre ladite zone de l'objet. L'organe de mesure sans contact peut être : un émetteur d'onde incidente et un récepteur d'onde renvoyée par ladite zone de l'objet permettant une mesure à partir du temps séparant l'émission de l'onde incidente et la réception de l'onde renvoyée ; ou un dispositif optique de capture d'image associé à un projecteur de trame lumineuse pour permettre un calcul de mesures par traitement de l'image de la trame lumineuse projetée sur la zone à mesurer ; ou une combinaison des deux précédents.

La poignée est généralement de type « pistolet ». Lorsque l'organe de mesure est de type sans contact, la poignée est le plus souvent équipée d'au moins un bouton commandant un commutateur relié par un circuit électrique à l'unité de commande pour permettre à l'opérateur de commander l'acquisition de signaux de mesure avec la main tenant la poignée et pointant l'organe de mesure. Lorsque l'organe de mesure est de type à contact, la poignée peut être équipée comme précédemment d'un bouton de commande de l'acquisition ou le commutateur peut être directement commandé par le palpeur en fonction de l'effort appliqué par le palpeur sur la zone de l'objet à mesurer.

### OBJET DE L'INVENTION

Un but de l'invention est de fournir un moyen pour améliorer les fonctionnalités d'un tel dispositif de mesure.

### BREF EXPOSE DE L'INVENTION

A cet effet, on prévoit, selon l'invention, un dispositif de mesure tridimensionnelle, comprenant un bras comportant des éléments articulés dont une base de fixation, un premier segment relié à la base par une première articulation, un deuxième segment relié au premier segment par une deuxième articulation, un corps d'interface relié au deuxième segment par une troisième articulation, et des capteurs positionnels associés aux articulations et reliés électriquement à une unité électronique d'acquisition pour fournir à l'unité électronique d'acquisition des signaux de mesure de positions relatives des segments les uns par rapport aux autres. Le corps d'interface porte un organe de mesure et un organe de préhension permettant à un opérateur de pointer l'organe de mesure vers une zone de l'objet à mesurer. L'organe de mesure comprend une partie cylindrique mâle ayant une portion engagée dans une pièce tubulaire d'accouplement solidaire du corps d'interface, la pièce tubulaire d'accouplement est pourvue d'un mécanisme de verrouillage de l'accouplement comprenant une manette montée sur un axe pourvu d'un premier joint d'étanchéité annulaire en appui contre une surface de la pièce tubulaire d'accouplement, et un deuxième joint d'étanchéité annulaire est monté entre la pièce tubulaire d'accouplement et la partie cylindrique mâle pour être déformé entre eux lorsque la partie cylindrique mâle est montée dans la pièce tubulaire d'accouplement solidaire du corps d'interface.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux dessins annexés, parmi lesquels :

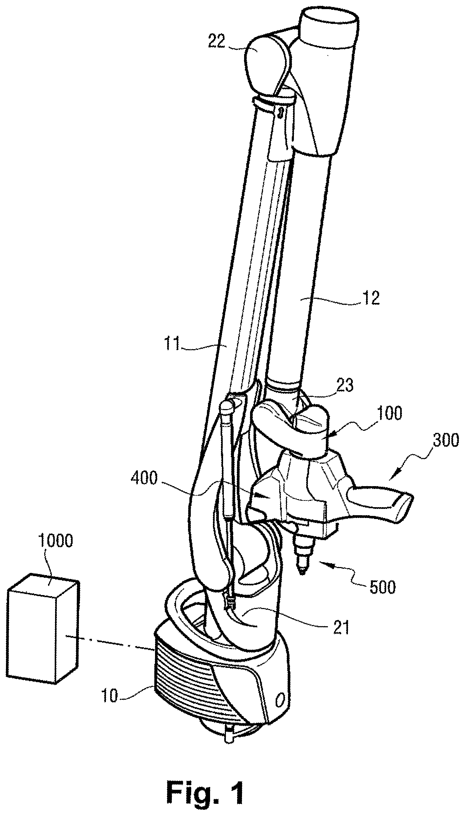

- la figure 1 est une vue en perspective d'un dispositif de mesure selon l'invention ;
- la figure 2 est une vue en perspective d'un corps d'interface formant une extrémité libre du bras du dispositif de mesure ;
- la figure 3 est une vue éclatée en perspective d'un premier organe de préhension du corps d'interface ;
- la figure 4 est une vue en perspective du premier organe de préhension et du corps d'interface avant montage ;
- la figure 5a est une vue éclatée en perspective d'un deuxième organe de préhension du corps d'interface ;
- la figure 5b est une vue partielle en perspective du support de fixation du deuxième organe de préhension ;
- la figure 6 est une vue en perspective du corps d'interface équipé des deux organes de préhension et d'un premier organe de mesure ;

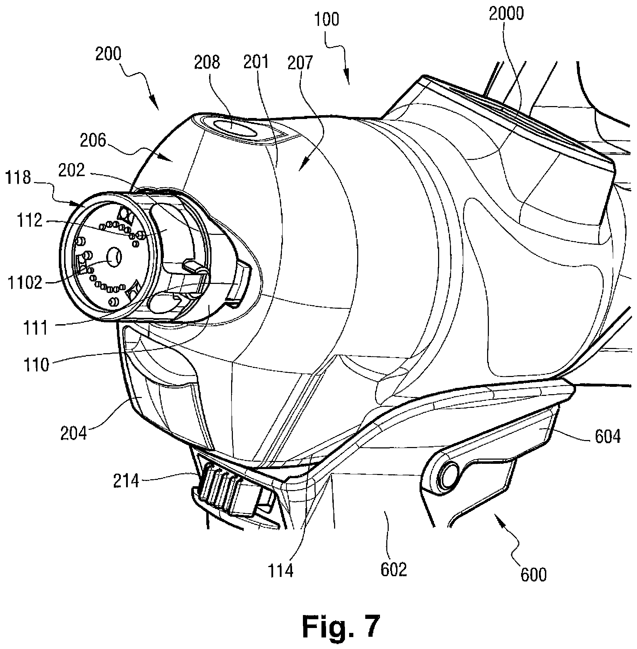

- la figure 7 est une vue de détail de la figure 6 avant mise en place du premier organe de mesure ;

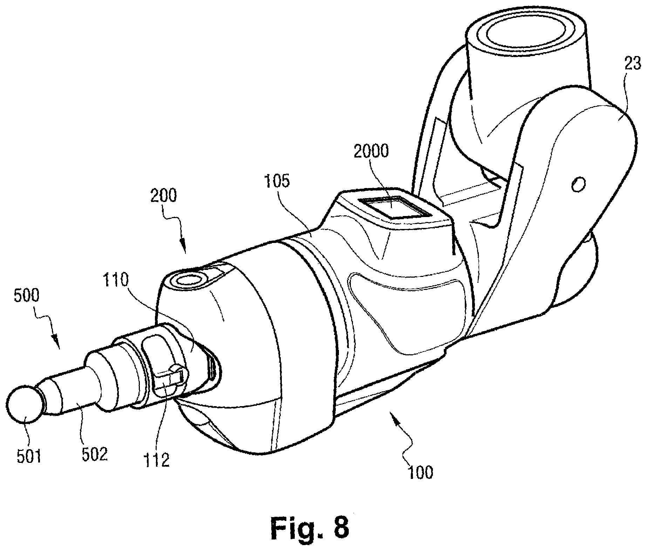

- la figure 8 est une vue en perspective du corps d'interface équipé du premier organe de préhension seulement et du premier organe de mesure ;

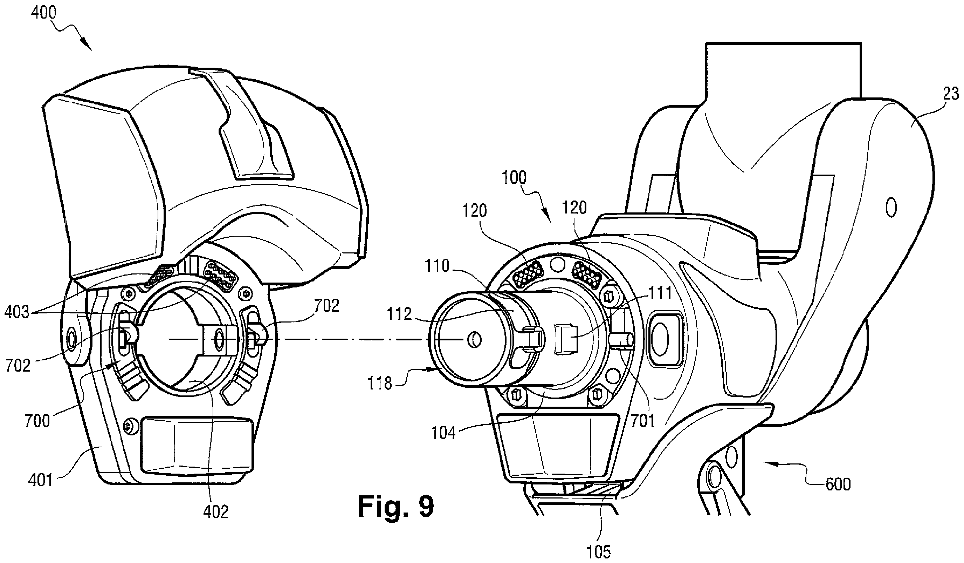

- la figure 9 est une vue en perspective d'un deuxième organe de mesure et du corps d'interface avant montage ;

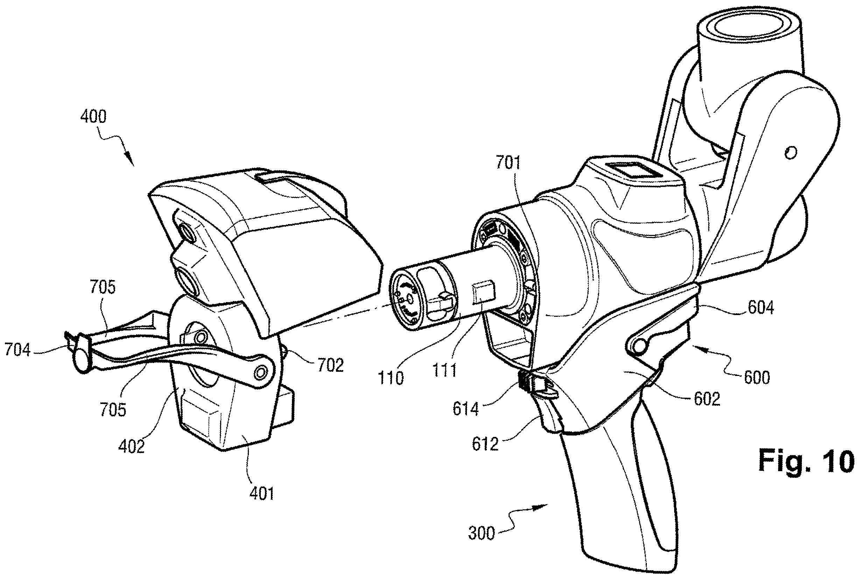

- la figure 10 est une vue en perspective du deuxième organe de mesure et du corps d'interface en cours de montage sur l'extrémité libre du bras ;
- la figure 11 est une vue en perspective du mécanisme d'assemblage du deuxième organe de mesure et du corps d'interface ;
- les figures 12 a, b, c, d, e montrent les opérations d'accouplement et de désaccouplement ;
- les figures 13 a, b, c montrent par transparence différentes positions de la partie du mécanisme d'assemblage embarquée sur le deuxième organe de mesure ;
- la figure 14 est une vue en perspective du deuxième organe de mesure monté sur l'extrémité libre du bras ;
- la figure 15 est une vue de détail de la partie frontale du corps d'interface ;
- la figure 16 est une vue en coupe de l'organe de mesure à distance selon le plan XVI de la figure 12a ;
- la figure 17 est une vue en perspective du corps d'interface équipée d'un support d'adaptation pour l'emport d'un troisième organe de mesure ;
- la figure 18 est une vue en perspective du corps d'interface avec le support d'adaptation pour l'emport d'un troisième organe de mesure en cours de montage ;
- la figure 19 est une vue en perspective du corps d'interface équipée du support d'adaptation, du troisième organe de mesure et d'un quatrième organe de mesure ;
- la figure 20 est une vue en coupe longitudinale du corps d'interface ;
- la figure 21 est une vue en perspective éclatée d'une interface d'accouplement du premier organe de mesure, et plus particulièrement d'une pièce tubulaire d'accouplement ;
- la figure 22 est une vue en perspective de cette interface d'accouplement.

### DESCRIPTION DETAILLEE DE L'INVENTION

En référence aux figures, le dispositif de mesure tridimensionnelle, selon l'invention, comprend un bras comportant des éléments articulés.

Les éléments articulés comprennent une base de fixation 10, un premier segment 11 relié à la base 10 par une première articulation 21, un deuxième segment 12 relié au premier segment 11 par une deuxième articulation 22, un corps d'interface 100 relié au deuxième segment 12 par une troisième articulation 23.

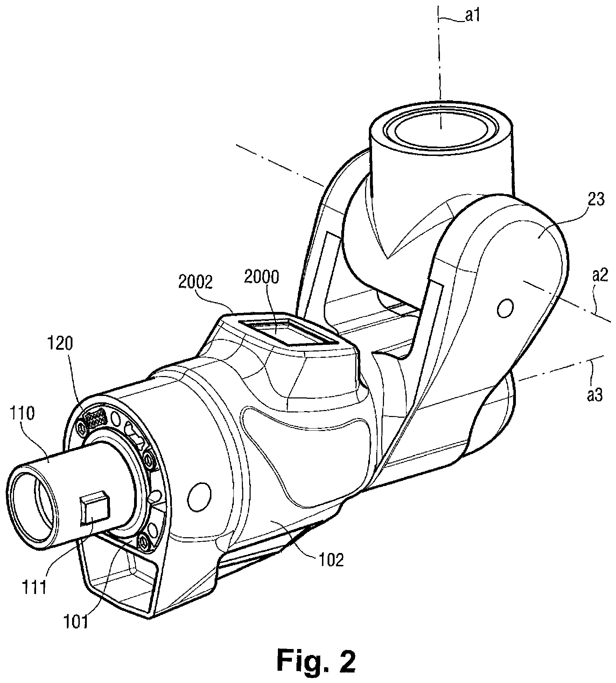

La première articulation 21 et la deuxième articulation 22 sont des articulations doubles autorisant un pivotement relatif des éléments qu'elles relient autour de deux axes perpendiculaires l'un à l'autre. La troisième articulation 23 est une articulation triple autorisant un pivotement relatif du deuxième segment 12 et du corps d'interface 100 autour de trois axes dont l'un est sensiblement perpendiculaire par rapport aux autres (les trois axes sont notés a1, a2, a3 sur la figure 2). Des capteurs positionnels non visibles sur les figures sont associés à chaque axe des articulations 21, 22, 23 et reliés électriquement à une unité électronique d'acquisition 1000 pour fournir à l'unité électronique d'acquisition 1000 des signaux de mesure de positions angulaires relatives des éléments les uns par rapport aux autres. Les capteurs peuvent être reliés à l'unité d'acquisition 1000 chacun par une paire de câbles ou tous ensemble par un bus. L'unité d'acquisition est par exemple un ordinateur, en particulier un ordinateur portable, raccordé par un connecteur de type USB ou autre à un connecteur correspondant débouchant à l'extérieur de l'embase 10. L'ordinateur exécute un programme de mesure tridimensionnelle connu en lui-même. L'embase 10 incorpore avantageusement un circuit électronique relié à un écran et agencé pour fournir à l'opérateur des informations sur l'état de fonctionnement du bras.

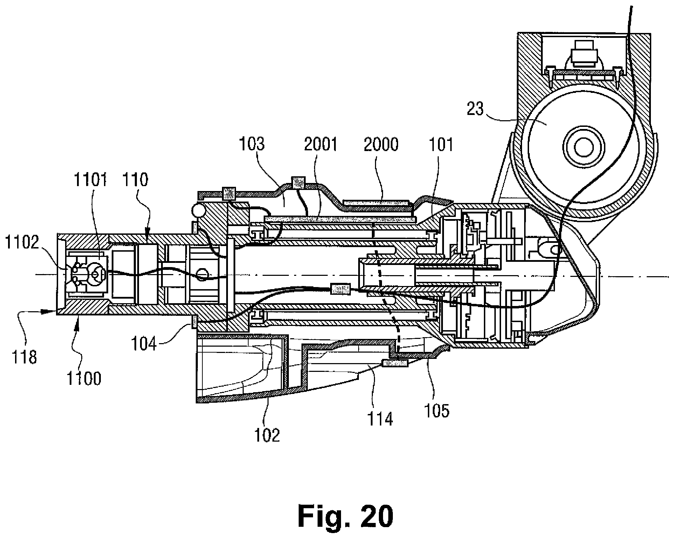

Le corps d'interface 100 comprend une structure 101 rigide par-dessus laquelle est monté un capotage 102 de telle manière qu'un espace 103 existe entre la structure 101 et le capotage 102 (voir plus particulièrement la figure 20).

Le corps d'interface 100 est pourvu d'un dispositif d'affichage 2000 électriquement relié à un circuit électronique 2001 lui-même électriquement relié à l'unité électronique d'acquisition 1000 par une ligne dédiée. Le dispositif d'affichage 2000 est équipé d'un bouton multidirectionnel 2002 électriquement relié au circuit électronique 2001 pour effectuer des choix dans des menus affichés par le dispositif d'affichage 2000. Le circuit électronique 2001 s'étend dans l'espace 103 existant entre la structure 101 et le capotage 102.

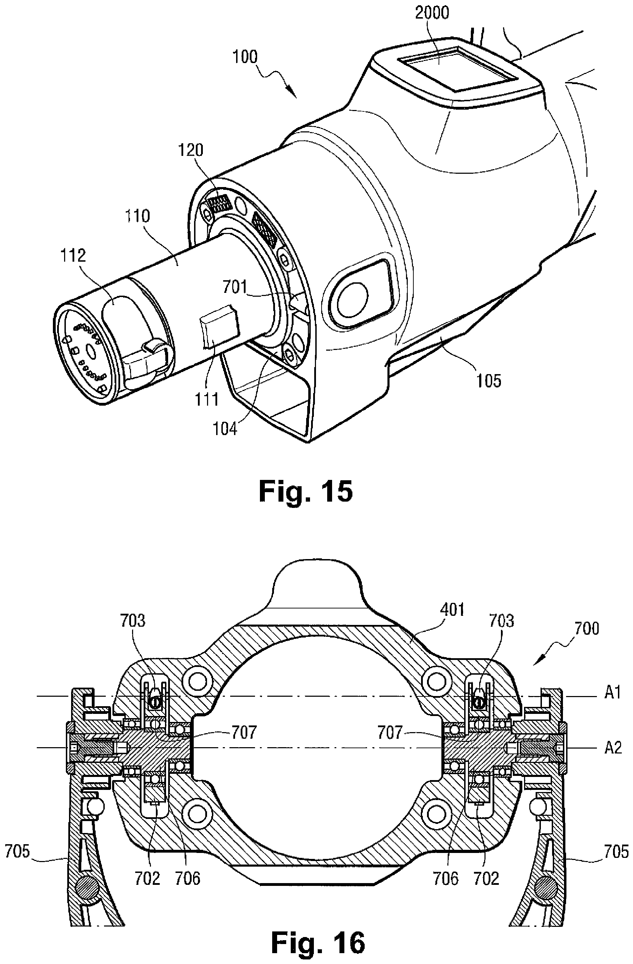

En référence plus particulièrement à la figure 15, le corps d'interface 100 comprend une face frontale 104 agencée pour former une platine de fixation alternativement d'un premier organe de préhension 200 et d'un organe de mesure à distance 400, une pièce tubulaire 110 d'accouplement à un organe de mesure par contact 500 s'étendant en saillie de ladite face frontale 104 ; et une surface latérale 105 agencée pour former une deuxième platine de fixation d'un deuxième organe de préhension 300.

La pièce tubulaire d'accouplement 110 est pourvue de deux redans externes 111 positionnés symétriquement l'un par rapport à l'autre.

Sur la face frontale 104 débouchent des connecteurs électriques 120 de raccordement à l'organe de mesure à distance 400.

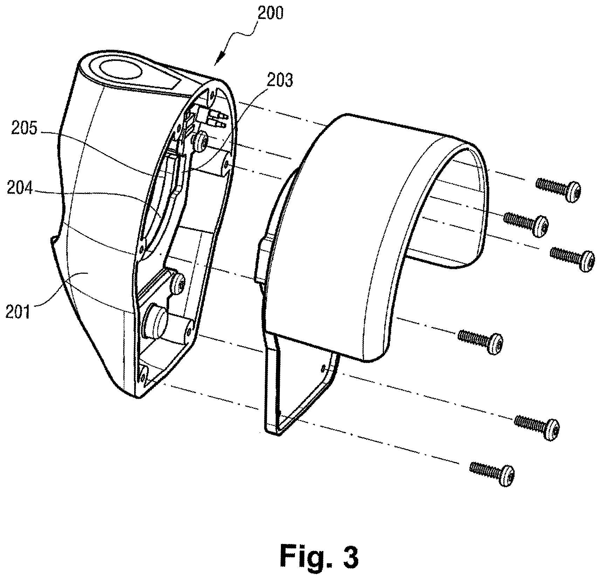

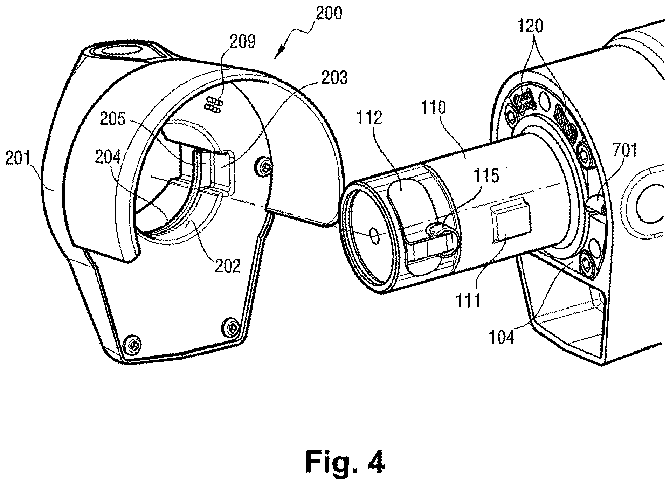

En référence plus particulièrement aux figures 3 et 4, le premier organe de préhension 200 comprend un corps préhensible annulaire 201 qui comprend un conduit cylindrique central 202 permettant au corps préhensible annulaire 201 d'être engagé sur la pièce tubulaire d'accouplement 110 de manière que le corps préhensible annulaire 201 s'étende par-dessus la surface frontale 104 et les connecteurs électriques 120. Le conduit cylindrique central 202 est pourvu de deux rainures axiales 203 pour recevoir les redans externes 111.

Un élément de retenue 204 est monté sur le corps préhensible annulaire 201 pour coulisser transversalement à la pièce tubulaire d'accouplement 110. L'élément de retenue 204 a une forme fourchue avec deux branches 205 et est monté sur le corps préhensible annulaire 201 entre :
- une position de retenue dans lequel les branches 205 ont une portion qui est en saillie dans les rainures axiales 203 et est destinée à être engagée derrière les redans externes 111 pour plaquer le corps préhensible annulaire 201 contre la face frontale 104, et
- une position de libération dans lequel les branches 205 ont une encoche coïncidant avec les rainures axiales 203 pour permettre le passage des redans externes 111. Les branches 205 ont des surfaces formant coin pour maintenir serré le corps préhensible annulaire 201 contre la face frontale 104. Le maintien de l'élément de retenue 204 dans chacune de ses positions est assuré par une bille montée dans un logement de l'élément de retenue 204 pour être mobile entre une position en saillie du logement dans laquelle elle est rappelée élastiquement et une position escamotée dans le logement. Le corps préhensible annulaire 201 est pourvu de deux renfoncements positionnés pour recevoir la bille en saillie lorsque l'élément de retenue 204 est respectivement en position de libération et en position de retenue. En variante, il est possible de prévoir simplement un ressort monté entre le corps préhensible annulaire 201 et l'élément de retenue 204 pour rappeler élastiquement l'élément de retenue 204 dans sa position de retenue.

Le corps préhensible annulaire 201 a une portion frontale de surface extérieure 206 qui est courbe et une portion latérale de surface extérieure 207 sur laquelle débouche au moins un bouton 208 d'actionnement d'un commutateur reçu dans le corps préhensible annulaire 201. Le commutateur est relié à un connecteur 209 embarqué sur le corps préhensible annulaire 201 pour être raccordé à l'un des connecteurs électriques 120 lorsque le corps préhensible annulaire 201 est appliqué contre la face frontale 104. La portion frontale de surface extérieure 206 est sensiblement en forme de calotte sphérique. On notera que le raccordement des connecteurs 209, 120 permet d'assurer une détection de présence du corps préhensible annulaire 200. On peut ainsi interdire, dans tout ou partie d'un protocole de mesure, la prise de points si le corps préhensible annulaire 200 n'est pas monté.

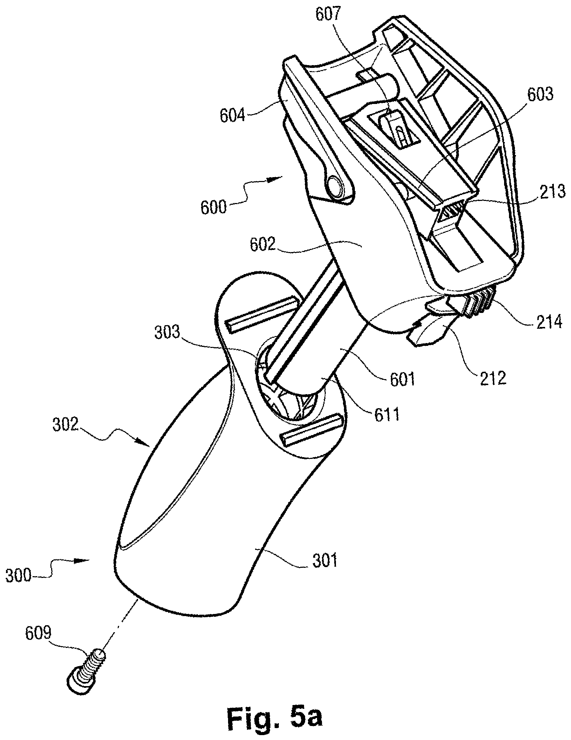

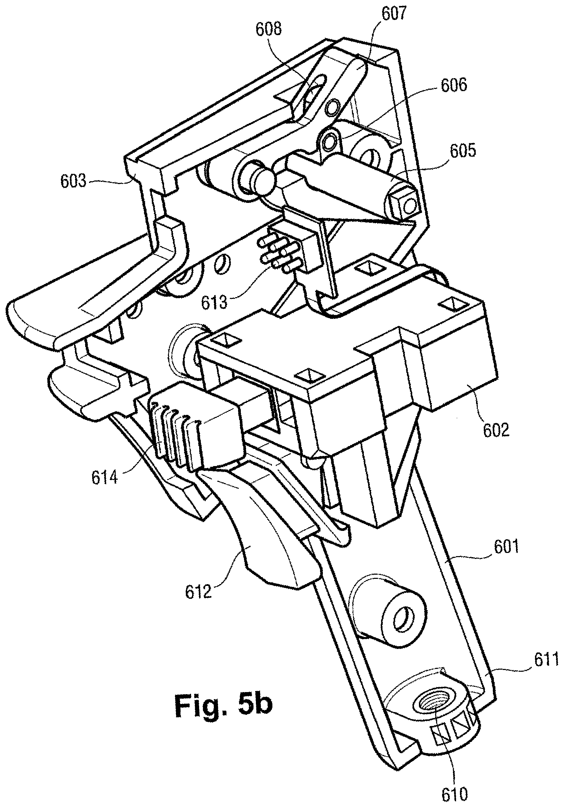

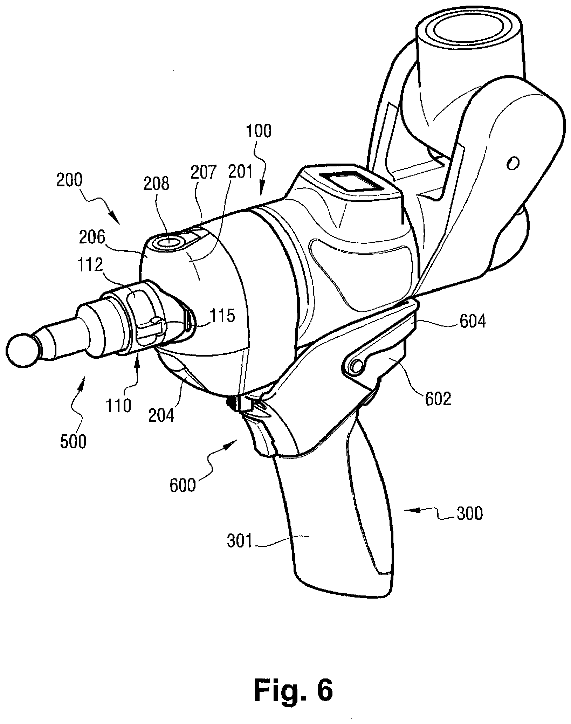

En référence plus particulièrement aux figures 5a, 5b, 6, le deuxième organe de préhension 300 a la forme d'une poignée 301 de type « pistolet ». La poignée 301 est solidaire d'une embase de fixation 600 comprenant un appendice de renfort 601 sur lequel est engagée la poignée 301 et une portion d'extrémité 602 qui comprend une glissière 603 s'étendant transversalement par rapport à une direction longitudinale de l'appendice de renfort 601 pour coopérer avec une glissière 114 de la surface latérale 105 du corps d'interface 100. Le corps d'interface 100 et la portion d'extrémité 602 du support de fixation 600 comprennent des moyens de butée réciproques de manière à définir une position d'engagement mutuel des glissières 603, 114 et des moyens de verrouillage réciproques s'opposant à un désengagement des glissières 603, 114. Les moyens de verrouillage réciproques comportent un levier de commande 604 qui est articulé sur la portion d'extrémité 602 de l'embase de fixation 600 entre une position d'activation des moyens de verrouillage et une position d'inactivation des moyens de verrouillage. Le levier de commande 604 a une forme en étrier à deux branches ayant des extrémités libres solidaires chacune d'une extrémité d'un arbre 605 qui est pourvu d'une chape 606 et qui est monté pour pivoter sur la portion d'extrémité 602 de l'embase de fixation 600. Le support de fixation 600 est pourvu d'un verrou basculant 607 ayant une première extrémité montée pour pivoter dans la portion d'extrémité 602 pour avoir une deuxième extrémité mobile entre une position escamotée et une position en saillie de la portion d'extrémité 602. Une biellette 608 est articlée d'un côté à la chape 606 et de l'autre au verrou basculant 607 de telle manière que, lorsque le levier de commande 604 est en position d'activation, le verrou basculant 607 est dans sa position en saillie pour coopérer avec une butée de la surface latérale 105 du corps d'interface 100 et s'oppose au désengagement des glissières 603, 114 et que, lorsque le levier de commande 604 est en position de désactivation, le verrou basculant 607 soit en position escamotée par rapport à la butée et autorise le désengagement des glissières 603, 114.

La poignée 301 est de forme tubulaire avec une surface extérieure préhensible 302 et une surface intérieure 303 définissant un logement dans lequel est engagé l'appendice de renfort 601. La poignée 301 est fixée sur l'appendice de renfort 601 de l'embase de fixation 600 par au moins une vis 609 traversant une paroi de fond de la poignée 301 pour être engagée dans un taraudage 610 d'une portion d'extrémité libre 611 de l'appendice de renfort 601 de l'embase de fixation 600 s'étendant en regard de la paroi de fond. Le dispositif selon l'invention comprend avantageusement un jeu de poignées 301 interchangeables et de dimensions externes différentes adaptées à différentes tailles de mains.

Ladite portion d'extrémité 602 de l'embase de fixation 600 comprend un bouton de commande d'acquisition 612 (en forme de queue de détente) actionnant un commutateur électriquement relié à un connecteur 613 de raccordement à un connecteur qui débouche sur la surface latérale 105 qui est électriquement relié à l'unité électronique d'acquisition 1000 et un bouton de sélection multidirectionnel 614 actionnant un commutateur électriquement relié lui aussi au connecteur 613. La poignée 301 est, elle, dépourvue de toute portion de circuit électronique ou de composant électronique. Il en est de même pour l'appendice de renfort 601.

En référence plus particulièrement à la figure 15, l'organe de mesure par contact 500 comprend un palpeur 501 porté par une partie cylindrique mâle 502 engagée dans une pièce tubulaire d'accouplement 110 solidaire du corps d'interface 100. La partie cylindrique mâle 502 et la pièce tubulaire d'accouplement 110 forment deux parties séparable d'une interface d'accouplement. La pièce tubulaire d'accouplement 110 est pourvue d'un mécanisme, généralement désigné en 1100, de verrouillage de l'accouplement comprenant une manette 112 formée d'une plaquette incurvée et portée par un axe 115 monté sur la pièce tubulaire d'accouplement 110 pour pivoter autour d'une direction radiale de la pièce tubulaire d'accouplement 110 entre une position de retenue de la partie cylindrique mâle 502 et une position de libération de la partie cylindrique mâle 502. La manette 112 est également montée sur la pièce tubulaire d'accouplement 110 pour pivoter entre une position plaquée contre une surface extérieure 113 de la pièce tubulaire d'accouplement 110 et une position relevée permettant sa manipulation.

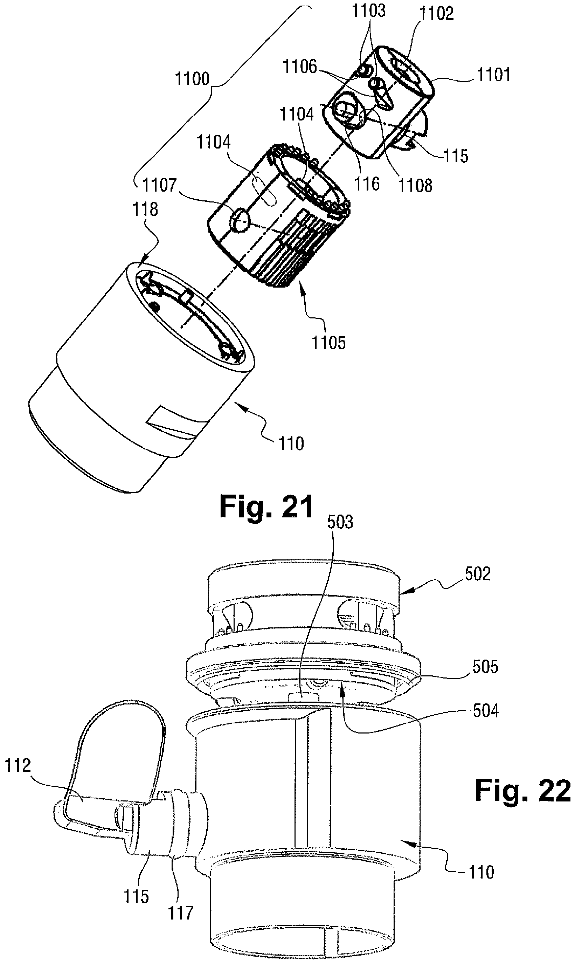

En référence plus particulièrement aux figures 20 à 22, le mécanisme de verrouillage 1100 logé dans la pièce tubulaire d'accouplement 110 est ici du type de celui décrit dans le document US-B-7282017. Le mécanisme de verrouillage 1100 comprend un tiroir 1101 définissant un logement 1102 de réception d'une queue 503 de la partie cylindrique mâle 502 et deux goupilles 1103 (mais une serait suffisante) s'étendant en regard l'une de l'autre de part et d'autre du logement 1102. Les goupilles 1103 ont des axes parallèles l'un à l'autre et contenus dans un même plan transversal au logement 1102, et sont montées dans le tiroir 1101 pour être mobiles entre une position de verrouillage dans laquelle les goupilles 1103 ont une portion centrale en saillie dans le logement 1102 et une position de déverrouillage dans laquelle la portion centrale des goupilles 1103 est escamotée vis-à-vis du logement 1102. Les goupilles 1103 ont des extrémités reçues dans deux rainures 1104 transversales ménagées en des positions diamétralement opposées dans une surface interne d'un insert 1105 fixé dans la pièce tubulaire d'accouplement 110. L'insert 1105 est en deux parties accolées l'une à l'autre le long d'un plan de joint contenant l'axe central de la pièce tubulaire d'accouplement 110, lesdites parties étant symétriques par rapport au plan de joint et chaque partie comportant une des rainures 1104 de réception des extrémités des goupilles 1103. Chaque goupille 1103 possède également deux portions intermédiaires qui s'étendent respectivement entre l'une des extrémités de ladite goupille et la portion centrale de ladite goupille et qui est reçue dans une fente 1106 ménagée dans le tiroir 1101 pour s'étendre de manière inclinée par rapport à l'axe central de la pièce tubulaire d'accouplement 110. Le tiroir 1101 est monté dans l'insert 1105 pour coulisser parallèlement à l'axe central de la pièce tubulaire d'accouplement 110 entre une première position et une deuxième position et l'inclinaison des fentes 1106 est déterminée pour que le déplacement du tiroir 1101 de sa première position jusque sa deuxième position provoque le déplacement des goupilles 1103 de leur position de verrouillage à leur position de déverrouillage, et inversement. L'axe 115 dont la manette 112 est solidaire d'une des extrémités a une extrémité opposée qui est engagée dans un trou 1107 ménagé dans l'insert 1105. Entre ses deux extrémités, l'axe 115 comprend une portion excentrée reçue dans une rainure 1108 ménagée dans le tiroir 1101 pour s'étendre transversalement à l'axe central de la pièce tubulaire d'accouplement 110 de telle manière que le pivotement de la manette 112 de sa position de retenue jusqu'à sa position de libération provoque le déplacement du tiroir 1101 de sa première position à sa deuxième position, et inversement. L'axe 115 de la manette 112 traverse une paroi de la pièce tubulaire d'accouplement 110 et l'insert 1105 et possède une gorge pourvue d'un joint annulaire d'étanchéité 117 coopérant avec la paroi de la pièce tubulaire d'accouplement 110 pour assurer une étanchéité entre ceux-ci.

La partie cylindrique mâle 502 comprend une face transversale 504 en saillie de laquelle s'étend la queue 503 qui est destinée à être introduite dans le logement 1102 du tiroir 1101 et qui est pourvue de deux encoches pour recevoir la portion centrale des goupilles 1103 dans leur position de verrouillage. La face transversale 504 est pourvue d'un joint d'étanchéité 505 sous la forme d'une lèvre périphérique en élastomère qui s'étend en saillie de ladite face transversale 504 pour prendre appui en se déformant sur une surface annulaire plane 118 de l'extrémité libre de la pièce tubulaire d'accouplement 110 et ainsi assurer une étanchéité entre la pièce tubulaire d'accouplement 110 et la partie cylindrique mâle 502. Les joints d'étanchéité 117 et 505 sont ici agencés pour permettre une conformité à la norme IP54.On notera que le fait de pouvoir rabattre la manette 112 sur la pièce tubulaire d'accouplement 110 présente un triple avantage. En effet, lorsqu'elle est en position rabattue, la manette 112 :
- ne gêne pas la manipulation du corps d'interface 100 pour les opérations de mesure ;
- ne gêne pas la mise en place, ni du premier organe de préhension 200 ni du deuxième organe de mesure à distance 400 ;
- s'oppose à sa rotation autour de la direction radiale de la pièce tubulaire d'accouplement (les parties incurvées de la manette 112 venant buter sur la surface extérieure de la pièce tubulaire d'accouplement).

L'organe de mesure à distance 400 comprend un bâti 401, un capteur optique et un projecteur d'une trame lumineuse. L'organe de mesure à distance 400 est destiné à être pointé vers une zone de l'objet à mesurer pour y projeter la trame lumineuse et en prendre une image. Le principe de fonctionnement de l'organe de mesure à distance 400 est connu en lui-même et ne sera pas détaillé ici.

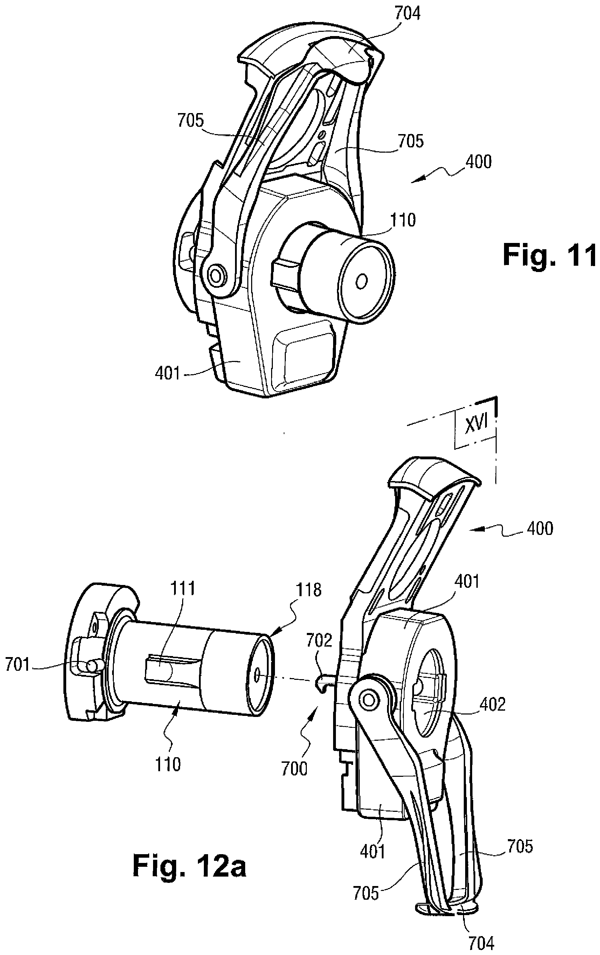

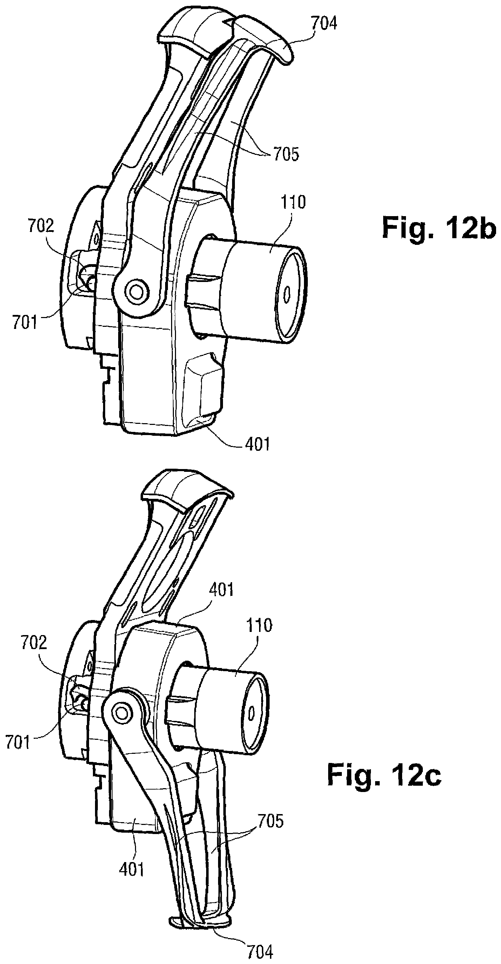

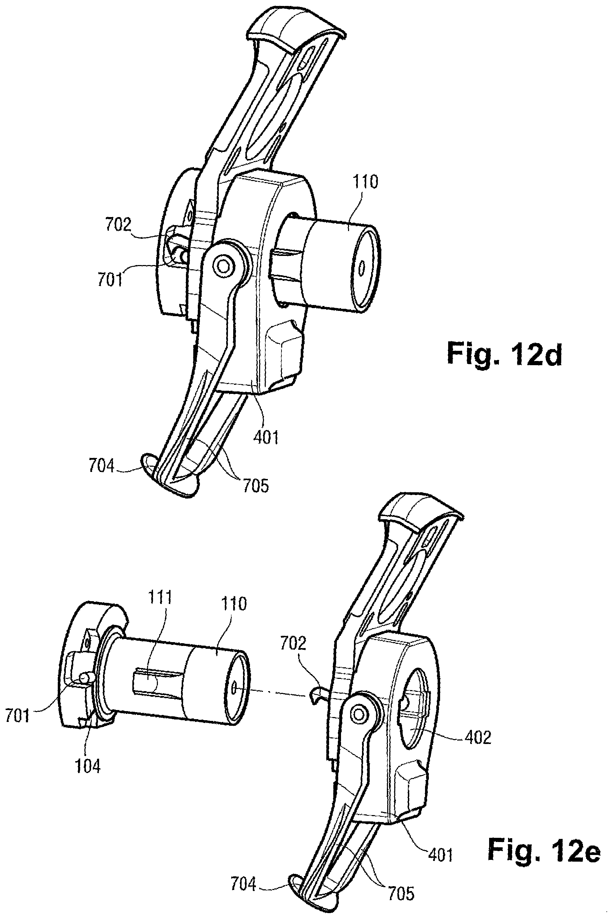

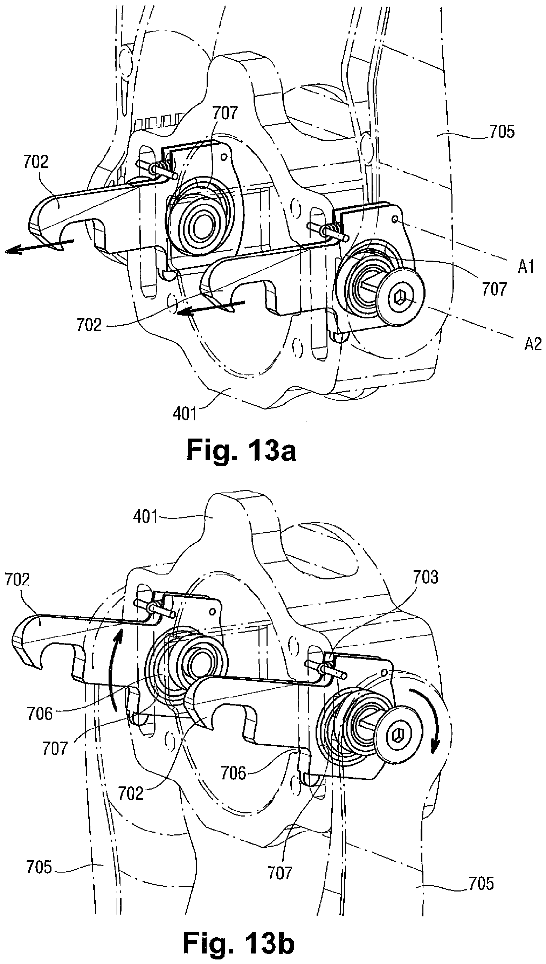

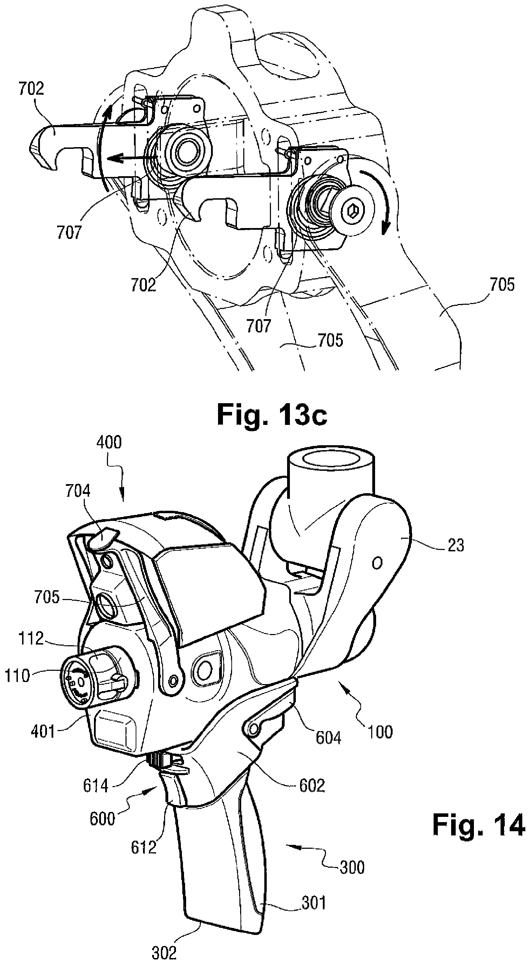

En référence plus particulièrement aux figures 11 à 13 et 16, le bâti 401 de l'organe de mesure à distance 400 comporte un orifice 402 de passage de la pièce tubulaire d'accouplement 110 et des connecteurs 403 pour être raccordés électriquement aux connecteurs 120 du corps d'interface 100. Le bâti 401 est destiné à être relié au corps d'interface 100 par un mécanisme de fixation 700 commandable sélectivement dans un état d'encliquetage (figures 12a, 12c, 13c) dans lequel l'organe de mesure à distance 400 est retenu sur le corps d'interface 100 alors que les connecteurs 403, 120 sont dégagés l'un de l'autre, un état de verrouillage (figures 11, 12b, 13a) dans lequel l'organe de mesure à distance 400 est fixé au corps d'interface 100 et les connecteurs 403, 120 sont engagés l'un dans l'autre, et un état de libération (figures 12d, 12e, 13b) dans lequel l'organe de mesure à distance 400 peut être séparé du corps d'interface 100.

Le mécanisme de fixation 700 comprend deux redans 701 disposés symétriquement de part et d'autre de la pièce tubulaire d'accouplement 110 et formés chacun par une barre traversant un logement ménagé dans la face frontale 104.

Le mécanisme de verrouillage comprend deux crochets 702 montés sur le bâti 401 de l'organe de mesure à distance 400 symétriquement de part et d'autre de l'orifice 401 pour basculer autour d'un axe de basculement A1 entre une position de verrouillage et une position de déverrouillage. Entre chaque crochet 702 et le bâti 401, s'étend un élément 703 de rappel élastique du crochet 702 vers la position de verrouillage.

Les crochets 702 du mécanisme de verrouillage 700 sont commandés par un levier 704 ayant une forme de fourche avec des branches 705 ayant une extrémité libre articulée sur le bâti 401 de l'organe de mesure à distance 400. L'extrémité libre de chaque branche 705 du levier 704 est articulée à l'organe de mesure à distance 400 autour d'un axe de pivotement A2 distinct de l'axe de basculement A1 du crochet 702 et qui est liée en rotation à un excentrique 706 reçu dans un logement 707 du crochet 702 de telle manière que :
- lorsque le levier 704 est dans une position de verrouillage (figure 12b), chaque excentrique 706 est en appui contre une surface inférieure du logement 707 et maintient le crochet 702 en position de verrouillage (figure 13a) ;
- lorsque le levier 704 est dans une position de déverrouillage (figures 12d, 12e), chaque excentrique 706 est en appui contre une surface supérieure du logement 707 et maintient le crochet 702 en position de déverrouillage (figure 13b) ;
- lorsque le levier 704 est dans une position d'encliquetage (figures 12c, 13c), chaque excentrique 706 est dans la partie supérieure du logement 707 pour ne pas gêner le déplacement du crochet entre ses deux positions de manière à laisser le crochet 702 dans un état d'encliquetage. Dans cet état, le crochet est libre d'être déplacé entre ses deux positions (figure 13c).

La position d'encliquetage du levier 704, c'est-à-dire celle correspondant à l'état d'encliquetage, est située entre les deux autres positions du levier 704.

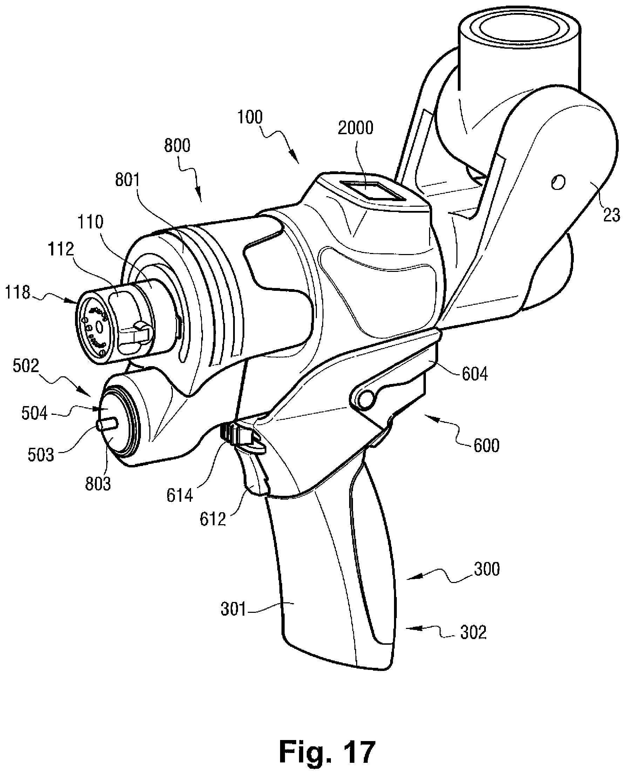

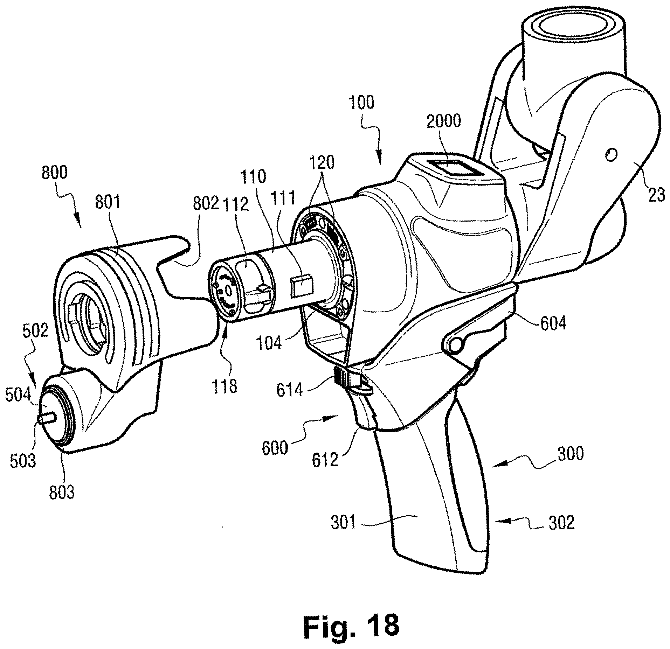

En référence plus particulièrement aux figures 17 à 19, le dispositif de mesure comprend un support de fixation 800 d'un troisième organe de mesure 900. Le troisième organe de mesure 900 est ici un organe de mesure sans contact pourvu d'une batterie et de moyens de liaison sans fil avec l'unité électronique d'acquisition 1000. En variante, il est possible de prévoir une liaison filaire externe entre le troisième organe de mesure 900 et l'unité électronique d'acquisition 1000. Le principe de fonctionnement de l'organe de mesure à distance 900 est connu en lui-même et ne sera pas détaillé ici.

Le support de fixation 800 comprend un corps 801 dans lequel sont réalisés deux logements 802, 803 débouchant sur des faces opposées du corps 801. Le support de fixation 800 est ici fixé au corps d'interface en utilisant un mécanisme similaire à celui utilisé pour la fixation du corps de préhension 200. Le logement 802 est dimensionné pour qu'un fond du logement 802 puisse être appliqué contre la face frontale 104 et que des parois du logement 802 enveloppent une partie de la surface extérieure du corps d'interface 100 bordant la face frontale 104. Le logement 803 est dimensionné pour que puisse y être fixée une partie d'un connecteur de raccordement au troisième organe de mesure 900. Le logement 803 est ici pourvu d'une partie mâle analogue à la partie mâle 502 coopérant avec la pièce tubulaire d'accouplement 110 tandis que le troisième organe de mesure est pourvu d'une pièce tubulaire d'accouplement identique à la pièce tubulaire d'accouplement 110. En fonctionnement, le support de fonctionnement 800 est positionné pour que le troisième organe de mesure 900 s'étende sous la pièce tubulaire d'accouplement 110 pour que la manipulation de l'ensemble formé par le corps d'interface 100, le support de fixation 800 et le troisième organe de mesure 900 soit plus confortable pour l'opérateur.

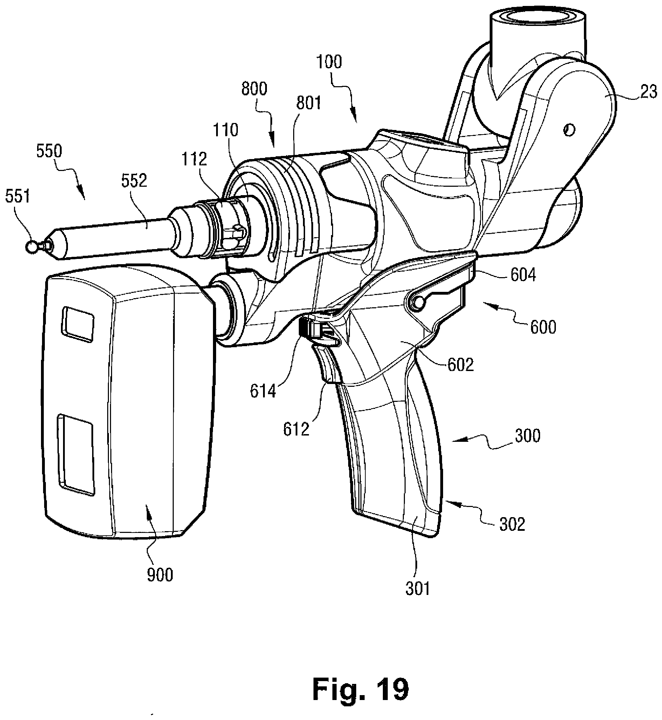

Il est visible sur la figure 19 que le dispositif de mesure est équipée d'un quatrième organe de mesure qui est un organe de mesure par contact 550 qui comprend un palpeur 551 porté par une partie cylindrique mâle 552 engagée dans la pièce tubulaire d'accouplement 110 solidaire du corps d'interface 100. L'organe de mesure par contact 550 est monté à la place de l'organe de mesure par contact 500 lorsqu'on souhaite procéder à la fois à des mesures par contact et à des mesures au moyen du troisième organe de mesure 900. L'organe de mesure par contact 550 est caractérisé en ce qu'il est plus long que l'organe de mesure par contact 500 de telle manière que le palpeur 551 puisse être mis en contact avec l'objet à mesurer en limitant le risque d'un contact entre le troisième organe de mesure 900 et ledit objet à mesurer.

On notera que, dans le mode de réalisation préféré ici décrit, le dispositif selon l'invention comprend six caractéristiques principales :
1) l'organe de mesure est relié au corps d'interface par un mécanisme de fixation commandable par un levier et agencé de telle manière que le levier commande le mécanisme de fixation sélectivement dans un état d'encliquetage dans lequel l'organe de mesure est retenu sur le corps d'interface alors que les connecteurs sont dégagés l'un de l'autre, un état de verrouillage dans lequel l'organe de mesure est fixé au corps d'interface et les connecteurs sont engagés l'un dans l'autre, et un état de libération dans lequel l'organe de mesure peut être séparé du corps d'interface ;
2) la poignée est de forme tubulaire avec une surface extérieure préhensible et une surface intérieure définissant un logement dans lequel est engagée une portion de renfort d'une embase de fixation ayant une portion d'extrémité qui est en saillie de la poignée et qui est fixée au corps d'interface ;
3) la poignée est solidaire d'une embase de fixation ayant une portion d'extrémité qui comprend une glissière qui s'étend transversalement par rapport à une direction longitudinale de la poignée pour coopérer avec une glissière du corps d'interface, le corps d'interface et la portion d'extrémité du support de fixation comprenant des moyens de butée réciproques de manière à définir une position d'engagement mutuel des glissières et des moyens de verrouillage réciproques s'opposant à un désengagement des glissières, les moyens de verrouillage réciproques comportant un levier de commande qui est articulé sur la portion d'extrémité de l'embase de fixation entre une position d'activation des moyens de verrouillage et une position d'inactivation des moyens de verrouillage ;
4) le corps d'interface comprend une face frontale agencée pour former une platine de fixation alternativement d'un premier organe de préhension et d'un organe de mesure à distance, une pièce tubulaire d'accouplement à un premier organe de mesure par contact s'étendant en saillie de ladite face frontale ; et une surface latérale agencée pour former une deuxième platine de fixation d'un deuxième organe de préhension ;
5) le corps d'interface comprend une face frontale sur laquelle débouche au moins un connecteur électrique et en saillie de laquelle s'étend une pièce tubulaire d'accouplement à l'organe de mesure, un corps préhensible annulaire étant engagé sur la pièce tubulaire d'accouplement et s'étendant par-dessus la surface frontale et le connecteur électrique, un élément de retenue formant coin étant monté sur le corps préhensible pour coulisser transversalement à la pièce tubulaire d'accouplement et être engagé derrière un redan externe de la pièce tubulaire d'accouplement pour maintenir le corps préhensible appliqué contre la face frontale du corps d'interface ;
6) l'organe de mesure comprend une partie cylindrique mâle engagée dans une pièce tubulaire d'accouplement solidaire du corps d'interface, la pièce tubulaire d'accouplement est pourvue d'un mécanisme de verrouillage de l'accouplement comprenant une manette formée d'une plaquette incurvée et montée sur la pièce tubulaire d'accouplement pour pivoter une position plaquée contre une surface extérieure de la pièce tubulaire d'accouplement et une position relevée permettant sa manipulation.

La caractéristique 1 est particulièrement intéressante en ce qu'elle facilite la mise en place de l'organe de mesure qui peut être relativement lourd et/ou encombrant. L'organe de mesure est mis en place alors que le mécanisme est dans son état d'encliquetage, ce qui permet d'attacher l'organe de mesure au corps d'interface, sans que l'opérateur n'ait à agir sur le levier, simplement en engageant l'organe de mesure sur la pièce tubulaire d'accouplement jusqu'à ce que l'encliquetage soit réalisé. Une fois l'organe de mesure attaché au corps d'interface, l'opérateur peut procéder par des manoeuvres plus fines à la connexion des connecteurs puis à l'immobilisation de l'organe de mesure par rapport au corps d'interface en commandant le mécanisme de fixation dans son état de verrouillage. Le retrait de l'organe de mesure est effectué en mettant le mécanisme de fixation dans son état de libération avant d'écarter l'organe de mesure et le corps d'interface.

La caractéristique 2 est particulièrement intéressante en ce qu'elle autorise un retrait rapide de la poignée par exemple pour la nettoyer, la réparer ou la remplacer par une poignée de dimensions différentes. Le fait d'avoir un support de fixation distinct de la poignée permet aussi de placer un bouton ou autre circuit électronique dans la partie supérieure du support de fixation, c'est-à-dire au-dessus de la poignée, de sorte que la poignée est peu coûteuse en elle-même et peut-être facilement remplacée.

La caractéristique 3 est particulièrement intéressante en ce qu'elle autorise une fixation relativement simple et rapide de l'organe de préhension.

La caractéristique 4 est particulièrement intéressante en ce qu'elle autorise une grande flexibilité d'emploi du bras du dispositif de mesure.

La caractéristique 5 est particulièrement intéressante en ce qu'elle va faire de la surface frontale du corps d'interface une zone de préhension du corps d'interface tout en assurant une protection du connecteur lui évitant des chocs et un encrassement.

La caractéristique 6 est particulièrement intéressante en ce que la plaquette ne gêne pas les manipulations du corps d'interface lors des opérations de mesure.

Bien entendu, l'invention n'est pas limitée aux modes de réalisation décrits mais englobe toute variante entrant dans le champ de l'invention telle que définie par les revendications.

En particulier, bien que le dispositif de mesure selon le mode de réalisation préféré comprenne six caractéristiques principales, l'invention s'applique à des dispositifs de mesure qui ne comportent pas toutes ces caractéristiques, lesdites caractéristiques pouvant être mises en oeuvre indépendamment les unes des autres.

Au moins une partie de circuit électronique 2001 peut s'étendre dans tout ou partie de l'espace existant entre la structure rigide 101 et le capotage 102.

L'unité d'acquisition 1000 peut être incorporée dans l'embase 10 qui comprend alors une unité informatique associée à une interface homme-machine comportant par exemple un clavier et un écran.

L'appendice de renfort 601 est facultatif.

La manette 112 peut avoir une autre forme qu'une plaquette incurvée, par exemple la forme d'un bouton.

Le premier joint d'étanchéité annulaire monté sur l'axe de la manette pour être en appui contre une surface de la pièce tubulaire d'accouplement peut avoir de multiples formes et par exemple être un joint torique ou un joint à lobe(s) ou un joint à lèvre.

Le deuxième joint d'étanchéité annulaire monté entre la pièce tubulaire d'accouplement et la partie cylindrique mâle pour être déformé entre eux lorsque la partie cylindrique mâle est montée dans la pièce tubulaire d'accouplement solidaire du corps d'interface peut avoir d'autre forme et par exemple être un joint torique.

La manette est agencée pour être mobile autour de son axe entre une position de verrouillage et une position de déverrouillage du mécanisme, la manette ayant une position intermédiaire dans laquelle le mécanisme de verrouillage permet l'introduction de la partie mâle et sa retenue élastique sans être verrouillé. Des structures différentes autorisant d'autres modes de fonctionnement sont possibles. Il est ainsi possible de ne pas avoir de position d'encliquetage.

Le levier 704 peut avoir une forme autre que celle décrite et peut par exemple comprendre une branche unique. En outre, le levier peut être monté pour pivoter ou pour coulisser.

Le mécanisme de fixation commandé par le levier 704 peut avoir une structure différente de celle décrite et par exemple ne comprendre qu'un crochet. La position d'encliquetage peut être disposée d'un côté ou de l'autre des deux autres positions au lieu de se trouver entre celles-ci.

Même si ce n'est pas le mode de réalisation préféré, la poignée 301 peut être pourvue d'au moins un bouton et/ou d'au moins un composant électronique.

L'embase de fixation peut être pourvue ou dépourvue de bouton(s) et/ou de composant(s) électronique(s).

La poignée 301 peut être fixée par un autre moyen que la vis 609 à l'embase de fixation 600 et par exemple par un mécanisme d'encliquetage ou par une goupille transversale traversant une partie de la poignée 301 et une partie de l'embase de fixation 600.

La portion de renfort 601 peut s'étendre sur tout ou partie de la poignée 301.

L'embase 600 peut être fixée au corps d'interface 100 par d'autres moyens et par exemple par une ou plusieurs vis, une goupille, ou autre.

Le bras peut avoir une structure différente de celle décrite, avec par exemple un nombre de segments différents, des articulations simples au lieu de doubles ou doubles au lieu de triples, et/ou des segments télescopiques...

Le corps d'interface peut être dépourvu d'afficheur et/ou de circuits électroniques.

Le levier 604 peut être solidaire d'un arbre 605 portant un ergot en appui contre le verrou basculant 607 pour former une came déplaçant le verrou basculant 607 entre ses deux positions.

Les organes de mesure peuvent être des palpeurs de formes et/ou dimensions différentes, par exemple coudés, avec une ou plusieurs extrémités de pointage de formes/dimensions différentes (par exemple sphériques ou coniques)...

Les organes de mesure peuvent être télémétriques, par exemple optiques et notamment stéréoscopiques, ou laser (type LIDAR) ou autre.

Le corps préhensible 200 peut être fixé par d'autre moyens au corps d'interface 100 et par exemple par un écrou vissé sur la pièce tubulaire d'accouplement 110, une goupille engagée transversalement dans le corps préhensible 200 et la pièce tubulaire d'accouplement 110, une clavette pentue engagée transversalement dans le corps préhensible 200 et la pièce tubulaire d'accouplement 110...

Le bras peut être pourvu d'un ou plusieurs boutons multifonctions et/ou d'un ou plusieurs boutons mono-fonctions.

Le mécanisme de verrouillage 1100 peut avoir une autre structure.

## Revendications

1. Dispositif de mesure tridimensionnelle, comprenant un bras comportant des éléments articulés dont une base de fixation (10), un premier segment (11) relié à la base par une première articulation (21), un deuxième segment relié au premier segment (12) par une deuxième articulation (22), un corps d'interface (100) relié au deuxième segment par une troisième articulation (23), et des capteurs positionnels associés aux articulations et reliés électriquement à une unité électronique d'acquisition (1000) pour fournir à l'unité électronique d'acquisition des signaux de mesure de positions relatives des segments les uns par rapport aux autres, le corps d'interface portant un organe de mesure (500) et un organe de préhension (300) permettant à un opérateur de pointer l'organe de mesure vers une zone de l'objet à mesurer, l'organe de mesure comprenant une partie cylindrique mâle (502) ayant une portion engagée dans une pièce tubulaire d'accouplement (110) solidaire du corps d'interface, **caractérisé en ce que** la pièce tubulaire d'accouplement est pourvue d'un mécanisme de verrouillage (1100) de l'accouplement comprenant une manette (112) montée sur un axe (115) pourvu d'un premier joint d'étanchéité (117) annulaire en appui contre une surface de la pièce tubulaire d'accouplement, et un deuxième joint d'étanchéité (505) annulaire est monté entre la pièce tubulaire d'accouplement et la partie cylindrique mâle pour être déformé entre eux lorsque la partie cylindrique mâle est montée dans la pièce tubulaire d'accouplement solidaire du corps d'interface.

2. Dispositif selon la revendication 1, dans lequel le deuxième joint d'étanchéité (505) comprend une lèvre.

3. Dispositif selon la revendication 2, dans lequel la lèvre (505) s'étend en saillie d'une face transversale (504) solidaire de la partie cylindrique mâle pour prendre appui contre une face transversale (118) de l'extrémité libre de la pièce tubulaire d'accouplement (110) .

4. Dispositif selon l'une quelconque des revendications précédentes, dans lequel la manette (112) est formée d'une plaquette incurvée et montée sur l'axe (115) pour pivoter entre une position plaquée contre une surface extérieure de la pièce tubulaire d'accouplement (110) et une position relevée permettant sa manipulation.

5. Dispositif selon la revendication 4, dans lequel l'axe (115) est monté sur la pièce tubulaire d'accouplement (110) pour pivoter autour d'une direction radiale de la pièce tubulaire d'accouplement.

6. Dispositif selon la revendication 4 ou la revendication 5, dans lequel l'axe (115) est agencé pour être mobile entre une position de verrouillage et une position de déverrouillage du mécanisme de verrouillage (1100), l'axe ayant une position intermédiaire dans laquelle le mécanisme de verrouillage permet l'introduction de la partie mâle (502) et sa retenue élastique sans être verrouillé.

7. Dispositif selon l'une quelconque des revendications précédentes, dans lequel la première articulation (21) et la deuxième articulation (22) sont des articulations doubles autorisant un pivotement relatif des éléments qu'elles relient autour de deux axes perpendiculaires l'un à l'autre.

8. Dispositif selon l'une quelconque des revendications précédentes, dans lequel la troisième articulation (23) est une articulation triple autorisant un pivotement relatif du deuxième segment et du corps d'interface (100) autour de trois axes dont l'un est sensiblement perpendiculaire aux autres.

9. Dispositif selon l'une quelconque des revendications précédentes, dans lequel le corps d'interface (100) est pourvu d'un dispositif d'affichage (2000) et d'un circuit électronique (2001) électriquement reliés à l'unité électronique d'acquisition (1000).

10. Dispositif selon la revendication précédente, dans lequel le dispositif d'affichage (2000) est équipé d'un bouton multidirectionnel (2002) pour effectuer des choix dans des menus affichés par le dispositif d'affichage.

11. Dispositif selon l'une quelconque des revendications précédentes, dans lequel le corps d'interface (100) comprend une structure rigide (101) par-dessus laquelle est monté un capotage (102) de telle manière qu'un espace existe entre la structure et le capotage, au moins une partie de circuit électronique (2001) s'étendant dans ledit espace.

12. Dispositif selon l'une quelconque des revendications précédentes, dans lequel le dispositif de mesure comprend un support de fixation (800) d'un troisième organe de mesure (900).

13. Dispositif selon la revendication précédente, dans lequel le support de fixation (800) comprend un corps (801) dans lequel sont réalisés deux logements (802, 803) débouchant sur des faces opposées du corps (801), l'un des logements (802) étant dimensionné pour recevoir une partie frontale du corps d'interface (100) et l'autre des logements (803) étant dimensionné pour que puisse y être fixée une partie du troisième organe de mesure (900).

## Patentansprüche

1. Vorrichtung zur dreidimensionalen Messung, umfassend einen Arm, der angelenkte Elemente umfasst, darunter eine Befestigungsbasis (10), ein erstes Segment (11), das mit der Basis über eine erste Gelenkverbindung (21) verbunden ist, ein zweites Segment, das mit dem ersten Segment (12) über eine zweite Gelenkverbindung (22) verbunden ist, einen Schnittstellenkörper (100), der mit dem zweiten Segment über eine dritte Gelenkverbindung (23) verbunden ist, und Positionssensoren, die mit den Gelenkverbindungen verknüpft und elektrisch mit einer elektronischen Erfassungseinheit (1000) verbunden sind, um an die elektronische Erfassungseinheit Positionsmesssignale der relativen Positionen der Segmente zueinander zu liefern, wobei der Schnittstellenkörper ein Messorgan (500) und ein Greiforgan (300) trägt, das einem Bediener ermöglicht, das Messorgan in Richtung eines Bereichs des zu messenden Objekts zu richten, wobei das Messorgan einen männlichen zylindrischen Teil (502) umfasst, der einen Abschnitt hat, der mit einem rohrförmigen Kupplungsstück (110) in Eingriff steht, das fest mit dem Schnittstellenkörper verbunden ist, **dadurch gekennzeichnet, dass** das rohrförmige Kupplungsstück mit einem Kupplungsverriegelungsmechanismus (1100) versehen ist, der einen Hebel (112) umfasst, der an einem Bolzen (115) gelagert ist, der mit einer ersten ringförmigen Dichtung (117) versehen ist, die an einer Fläche des rohrförmigen Kupplungsstücks anliegt, und eine zweite ringförmige Dichtung (505) zwischen dem rohrförmigen Kupplungsstück und dem männlichen zylindrischen Teil gelagert ist, um zwischen diesen verformt zu werden, wenn der männliche zylindrische Teil in dem rohrförmigen Kupplungsstück, das fest mit dem Schnittstellenkörper verbunden ist, montiert ist.

2. Vorrichtung nach Anspruch 1, bei der die zweite Dichtung (505) eine Lippe umfasst.

3. Vorrichtung nach Anspruch 2, bei der die Lippe (505) von einer Querfläche (504) vorsteht, die fest mit dem männlichen zylindrischen Teil verbunden ist, um an einer Querfläche (118) des freien Endes des rohrförmigen Kupplungsstücks (110) zur Anlage zu kommen.

4. Vorrichtung nach einem der vorhergehenden Ansprüche, bei der der Hebel (112) aus einer gekrümmten Platte gebildet und an dem Bolzen (115) gelagert ist, um zwischen einer gegen eine Außenfläche des rohrförmigen Kupplungsstücks (110) gedrückten Position und einer angehobenen Position, die seine Betätigung gestattet, verschwenkt zu werden.

5. Vorrichtung nach Anspruch 4, bei der der Bolzen (115) an dem rohrförmigen Kupplungsstück (110) gelagert ist, um um eine radiale Richtung des rohrförmigen Kupplungsstücks zu schwenken.

6. Vorrichtung nach Anspruch 4 oder Anspruch 5, bei der der Bolzen (115) ausgebildet ist, zwischen einer Verriegelungsposition und einer Entriegelungsposition des Verriegelungsmechanismus (1100) beweglich zu sein, wobei der Bolzen eine Zwischenposition hat, in der der Verriegelungsmechanismus das Einführen des männlichen Teils (502) und dessen elastisches Halten ohne Verriegelung ermöglicht.

7. Vorrichtung nach einem der vorhergehenden Ansprüche, bei der die erste Gelenkverbindung (21) und die zweite Gelenkverbindung (22) doppelte Gelenkverbindungen sind, die ein relatives Verschwenken der Elemente, die sie verbinden, um zwei zueinander senkrechte Achsen gestatten.

8. Vorrichtung nach einem der vorhergehenden Ansprüche, bei der die dritte Gelenkverbindung (23) eine dreifache Gelenkverbindung ist, die ein relatives Verschwenken des zweiten Segments und des Schnittstellenkörpers (100) um drei Achsen ermöglicht, von denen eine im Wesentlichen senkrecht zu den anderen ist.

9. Vorrichtung nach einem der vorhergehenden Ansprüche, bei der der Schnittstellenkörper (100) mit einer Anzeigevorrichtung (2000) und einer elektronischen Schaltung (2001) versehen ist, die elektrisch mit der elektronischen Erfassungseinheit (1000) verbunden ist.

10. Vorrichtung nach dem vorhergehenden Anspruch, bei der die Anzeigevorrichtung (2000) mit einer multidirektionalen Taste (2002) versehen ist, um eine Auswahl in von der Anzeigevorrichtung angezeigten Menus zu treffen.

11. Vorrichtung nach einem der vorhergehenden Ansprüche, bei der der Schnittstellenkörper (100) eine starre Struktur (101) umfasst, über der eine Abdeckung (102) derart angebracht ist, dass ein Raum zwischen der Struktur und der Abdeckung vorhanden ist, wobei sich mindestens ein Teil der elektronischen Schaltung (2001) in dem genannten Raum erstreckt.

12. Vorrichtung nach einem der vorhergehenden Ansprüche, bei der die Messvorrichtung einen Befestigungsträger (800) zur Befestigung eines dritten Messorgans (900) umfasst.

13. Vorrichtung nach dem vorhergehenden Anspruch, bei der der Befestigungsträger (800) einen Körper (801) umfasst, in dem zwei Aufnahmen (802, 803) ausgebildet sind, die auf gegenüberliegenden Seiten des Körpers (801) münden, wobei eine der Aufnahmen (802) bemessen ist, um einen vorderen Teil des Schnittstellenkörpers (100) aufzunehmen, und die andere der Aufnahmen (803) bemessen ist, damit darin ein Teil des dritten Messorgans (900) befestigt werden kann.

## Claims

1. A three-dimensional measuring device, comprising an arm made up of articulated elements including a fastener base (10), a first segment (11) connected to the base by a first hinge (21), a second segment connected to the first segment (12) by a second hinge (22), an interface body (100) connected to the second segment by a third hinge (23), and position sensors associated with the hinges and electrically connected to an electronic acquisition unit (1000) for supplying the electronic acquisition unit with position measurement signals measuring the positions of the segments relative to one another, the interface body carrying a measuring member (500) and a grip member (300) enabling an operator to point the measuring member at a zone of the object that is to be measured, the measuring device including a male cylindrical portion (502) having a portion engaged in a tubular coupling part (110) secured to the interface body, being **characterized in that** the tubular coupling part is provided with a coupling locking mechanism (1100) comprising a tab (112) mounted on a pin (115) provided with a first annular sealing gasket (117) bearing against a surface of the tubular coupling part, and a second annular sealing gasket (505) is mounted between the tubular coupling part and the male cylindrical portion to be deformed between them when the male cylindrical portion is mounted in the tubular coupling part secured to the interface body.

2. A device according to claim 1, wherein the second sealing gasket (505) includes a lip.

3. A device according to claim 2, wherein the lip (505) projects from a transverse face (504) secured to the male cylindrical portion in order to bear against a transverse face (118) of the free end of the tubular coupling part (110).

4. A device according to any preceding claim, wherein the tab (112) is formed by a curved plate and is mounted on the pin (115) to pivot between a position pressed against an outside surface of the tubular coupling part (110) and a raised position enabling it to be handled.

5. A device according to claim 4, wherein the pin (115) is mounted on the tubular coupling part (110) to pivot about a radial direction of the tubular coupling part.

6. A device according to claim 4 or claim 5, wherein the pin (115) is arranged to be movable between a locking position and an unlocking position for the locking mechanism (1100), with the pin having an intermediate position in which the locking mechanism allows the male portion (502) to be inserted and held resiliently without being locked.

7. A device according to any preceding claim, wherein the first hinge (21) and the second hinge (22) are double hinges allowing the elements that they connect together to pivot relative to each other about two mutually perpendicular axes.

8. A device according to any preceding claim, wherein the third hinge (23) is a triple hinge allowing the second segment and the interface body (100) to pivot relative to each other about three axes, one of which is substantially perpendicular to the others.

9. A device according to any preceding claim, wherein the interface body (100) is provided with a display device (2000) and an electronic circuit (2001) that are electrically connected to the electronic acquisition unit (1000).

10. A device according to the preceding claim, wherein the display device (2000) is fitted with a multidirectional button (2002) for making selections in menus displayed by the display device.

11. A device according to any preceding claim, wherein the interface body (100) comprises a rigid structure (101) over which there is mounted a cover (102) in such a manner that there exists a space between the structure and the cover, at least a portion of the electronic circuit (2001) extending in said space.

12. A device according to any preceding claim, wherein the measuring device includes a fastener support (800) for fastening a third measuring member (900).

13. A device according to the preceding claim, wherein the fastener support (800) comprises a body (801) having two housings (802, 803) formed therein and opening out in opposite faces of the body (801), one of the housings (802) having dimensions for receiving a front portion of the interface body (100), and the other housing (803) having dimensions enabling a portion of the third measuring member (900) to be fastened therein.
